## Europäisches Patentamt

## European Patent Office

(11) Numéro de publication: **0 172 105**
**B1**

## Office européen des brevets

# FASCICULE DE BREVET EUROPÉEN

(45) Date de publication du fascicule du brevet:
**23.11.88**

(51) Int. Cl.⁴: **B 23 B 41/00,** B 23 B 39/20

(21) Numéro de dépôt: **85401594.8**

(22) Date de dépôt: **05.08.85**

(54) Centre d'usinage de profilés, à commande numérique.

(30) Priorité: **08.08.84 FR 8412556**

(43) Date de publication de la demande:
**19.02.86 Bulletin 86/8**

(45) Mention de la délivrance du brevet:
**23.11.88 Bulletin 88/47**

(84) Etats contractants désignés:
**AT BE CH DE GB IT LI LU NL SE**

(56) Documents cité:
**DE-A-2 415 118**
**DE-A-3 216 566**
**FR-A-1 410 534**
**FR-A-1 578 697**
**FR-A-1 579 900**
**FR-A-2 167 575**
**FR-A-2 440 572**
**GB-A-2 041 265**
**US-A-4 061 064**

(73) Titulaire: **PROMAT INDUSTRIE Société Anonyme dite:, Zone Industrielle, F-33360 Latresne (FR)**

(72) Inventeur: **Andriussi, François, 7, rue des Merlots, F-33360 - Latresne (FR)**

(74) Mandataire: **Caunet, Jean, Cabinet BEAU DE LOMENIE 55, rue d'Amsterdam, F-75008 Paris (FR)**

LIBER, STOCKHOLM 1988

## Description

La présente invention concerne un centre d'usinage de profilés, à commande numérique (pointage, perçage, taraudage, lamage...)

De tels centres d'usinage sont connus, notamment par la demande de brevet française FR-A-2 167 575, et comprennent un convoyeur pour supporter chaque profilé, un chariot motorisé piloté par la commande numérique, une pince portée par le chariot pour saisir et déplacer le profilé considéré suivant l'axe X, au moins un étau pour immobiliser le profilé au poste d'usinage, un bâti fixe à ce poste, au moins un outil d'usinage et des moyens guidés sur le bâti fixe et motorisés sous la dépendance, pour certains, de la commande numérique pour le positionnement et l'avance d'usinage de ces outils suivant des axes angulaires Y et Z situés dans un plan faisant un angle de préférence droit avec l'axe X.

Le plus souvent, l'usinage à exécuter est un perçage et, si le profilé à usiner est du type en U, en I.., le perçage peut être effectué perpendiculairement à l'âme et aux deux ailes, c'est-à-dire au-dessus dudit profilé du haut vers le bas, à droite vers la gauche et à gauche vers la droite.

Pour cette raison, les centres d'usinage connus comportent trois unités d'usinage communiquant six mouvements (trois de positionnement et trois d'usinage) à trois forets. Ainsi, le bâti fixe est un pont enjambant le convoyeur et présentant deux montants reliés par une traverse. Sur la traverse peut se déplacer un chariot horizontal mû par un "actionneur" de positionnement (mécanique, électrique, hydraulique, pneumatique ou autre..) et relativement auquel peut se déplacer une broche tournante verticale porte-foret mue par un "actionneur" d'avance de perçage. Le long de chacun des montants peut se déplacer un chariot vertical mû par un "actionneur" de positionnement (mécanique, électrique, hydraulique, pneumatique ou autre..) et relativement auquel peut se déplacer une broche tournante horizontale porte-foret mue par un "actionneur" d'avance de perçage.

Les "actionneurs" de positionnement assurent une fonction spécialisée très particulière puisqu'il s'agit de déplacer un chariot avec une puissance relativement faible suivant une plage de vitesse étendue (avance rapide, approche lente et arrêt précis). Ces actionneurs de positionnement ont donc des caractéristiques organiques et fonctionnelles très spécifiques. Ils sont d'ailleurs pilotés par la commande numérique du centre d'usinage qui délivre des consignes de positionnement en fonction du programme affiché. Des capteurs de position placés sur le trajet du chariot délivrent également des signaux significatifs de la position atteinte. L'unité de calcul de la commande numérique compare la position atteinte avec la position affichée. La commande numérique contrôle alors, en fonction de l'écart relevé lors de la comparaison, la transmission des ordres précités à "l'actionneur" du chariot correspondant: démarrage, maintien de l'avance rapide, déclenchement de l'approche lente, arrêt et blocage.

Les "actionneurs" d'avance de perçage ne sont pas asservis, comme les "actionneurs" de positionnement, à la commande numérique. Ils sont asservis directement à un ou plusieurs détecteurs de vitesse de rotation, de couple, de poussée ... et ne dépendent par conséquent pas d'un programme affiché à la commande numérique, ce qui conduit à une souplesse de fonctionnement réduite et à l'existence de temps morts lors des changements d'outils. D'ailleurs, ces "actionneurs" assurent une fonction spécialisée très différente de celle des "actionneurs" de positionnement, puisqu'il s'agit d'avancer le foret à puissance élevée et vitesse limitée lors de l'usinage. Ils sont donc conçus organiquement et fonctionnellement de façon différente des "actionneurs" de positionnement.

La présente invention a pour but de simplifier le centre d'usinage, d'une part, pour en réduire le prix de revient, d'autre part, pour en accroître les automatismes au point d'être entièrement autonome une fois chargé des programmes appropriés au cycle de fabrication choisi.

Dans ce but et conformément à l'invention, les moyens de positionnement et d'avance d'usinage sont constitués uniquement par une seule unité d'usinage qui, d'une façon connue notamment par la demande de brevet allemand DE-A-3 216 566, comprend deux éléments mobiles en translations croisées, le premier étant mobile par rapport au bâti fixe et le deuxième par rapport au premier, ce deuxième élément mobile portant une tête orientable d'usinage équipée d'au moins un outil; de plus, pas connu document precité, chacun des deux éléments mobiles étant commandé en déplacement par un actionneur, chacun des deuxdits actionneurs est polyvalent en particulier pour pouvoir avancer à faible puissance suivant une plage de vitesse étendue et avec précision lors d'un positionnement ou avancer à puissance élevée et vitesse limitée lors d'un usinage, l'actionneur considéré de chaque élément mobile étant alors piloté par la commande numérique de façon sélective dans le cadre de son programme général pour exécuter notamment des consignes exclusives de positionnement, des consignes exclusives d'avance d'usinage ou des consignes combinées, ce qui permet à cette unité d'usinage unique à deux éléments mobiles en translation et à tête orientable de pouvoir être déplacée pour le positionnement suivant l'axe Y et suivant l'axe Z, et de pouvoir être déplacée pour l'avance d'usinage suivant au moins deux directions par rapport au bâti fixe en sélectionnant l'élément auquel les consignes de positionnement sont affectées et celui auquel les consignes d'avance d'usinage sont elles-mêmes affectées.

Ainsi, cette combinaison particulière permet de supprimer deux têtes d'usinage et quatre mouvements; elle permet également de mettre sous la dépendance de la commande numérique, non seulement la fonction de positionnement, mais également la fonction d'usinage.

Suivant une forme de réalisation particulièrement avantageuse, le premier élément mobile est à axe de déplacement horizontal et le deuxième est à axe vertical; en outre, la tête orientable peut être une tourelle à quatre broches d'usinage perpendiculaires entre elles deux à deux et, de préférence, entraînées ensemble en rotation.

Si les usinages, tels que des perçages, sont à exécuter parallèlement aux axes de déplacement, la commande numérique est organisée pour que le premier et le deuxième éléments mobiles soient susceptibles d'être asservis indifféremment, l'un à des consignes de positionnement et l'autre à des consignes d'avance d'usinage.

Si les usinages sont à exécuter en oblique par rapport aux axes de déplacement, la commande numérique est organisée pour que l'un au moins quelconque des deux éléments mobiles soient susceptible d'être asservi à des consignes de positionnement définies par le calcul de la position de départ de la course d'usinage et que les deux éléments mobiles soient susceptibles d'être asservis à des consignes d'avance d'usinage coordonnées déterminées par la pente de la course d'usinage.

Dès lors que la commande numérique intervient sur les deux éléments mobiles indépendamment l'un de l'autre ou en relation mutuelle, d'autres fonctions peuvent devenir opérationnelles simplement en mobilisant d'une façon particulière ces éléments mobiles et éventuellement la tête orientable.

Une première fonction complémentaire est de déterminer dans le profilé à usiner la surface fictive de référence relativement à laquelle la cote des usinages doit être mesurée par la commande numérique jusqu'à présent, le centre d'usinage comprend un palpeur électrique ou autre, fixé relativement au support de l'une des broches de perçage horizontal. Dès lors, sa distance à l'aile du profilé est constante et maximale, puisqu'elle est déterminée pour le profilé admissible de plus grande section. Tant qu'il s'agit d'un gros profilé, ce n'est pas un inconvénient puisque la détection par un déplacement de positionnement est effectuée près de l'arrondi de raccordement de l'aile avec l'âme. Mais s'il s'agit d'un petit profilé, c'est un inconvénient, car la détection est exécutée trop loin de l'aile et peut être entachée d'une erreur qui nuit à la précision du positionnement de l'outil d'usinage. Pour remédier à cet inconvénient, il faudrait positionner le palpeur en fonction de la section du profilé en cours d'usinage. Certains centres offrent cette possibilité, mais par l'intermédiaire d'un réglage manuel qui augmente les temps morts et s'oppose à un automatisme total du centre.

Le centre d'usinage selon l'invention permet de réaliser ce réglage de façon entièrement automatique sous le contrôle de la commande numérique. A cet effet, le palpeur escamotable est porté par le deuxième élément mobile par l'intermédiaire d'un bras pivotant permettant de détecter par la droite ou par la gauche, de façon qu'en fonction du programme, ce premier élément mobile piloté par la commande numérique en application des consignes de positionnement amène ce palpeur à la distance des ailes du profilé la mieux appropriée à la mesure et que le deuxième élément mobile piloté par la commande numérique en application des consignes de positionnement amène ledit palpeur au contact de l'âme du profilé, la cote de contact étant alors prise en compte par l'unité de calcul de la commande numérique pour déterminer l'origine des mesures ultérieurement définies par les consignes de positionnement, puis le palpeur étant escamoté et les deux éléments mobiles étant pilotés par la commande numérique en positionnement et usinage pour l'exécution d'un nouveau cycle d'usinage.

Une deuxième fonction complémentaire réside dans la détection de la longueur réelle d'un outil et sa mise en mémoire de façon automatique sous le contrôle de la commande numérique.

Jusqu'à présent, les consignes de positionnement de la commande numérique tiennent compte, à chaque changement d'outil, de la longueur réelle de celui-ci lorsqu'il s'agit surtout d'un foret. Pour mesurer cette longueur, il est connu d'utiliser un palpeur électrique monté sur un outillage porte - foret et de déplacer manuellement le chariot porte - foret jusqu'au contact, la longueur ainsi mesurée étant mise en mémoire dans l'unité de calcul de la commande numérique de positionnement. Mais ce cycle n'est pas automatique et s'accompagne de temps morts trop importants.

Le centre d'usinage selon l'invention permet de réaliser cette détection de longueur et sa mise en mémoire de façon entièrement automatique sous le contrôle de la commande numérique.

Le moyen de l'invention mis en oeuvre à cet effet comporte le palpeur précité et la commande numérique du centre permet d'orienter la tête porte-outils, de l'amener en regard du palpeur par le deuxième élément mobile piloté suivant une consigne particulière d'avance d'usinage et de la déplacer vers le palpeur par le premier élément mobile piloté suivant une consigne particulière de positionnement de façon à mesurer dès le contact la différence de course par rapport à un outil témoin ou une absence d'outil.

Une troisième fonction complémentaire est le changement automatique d'outils. Jusqu'à présent, le dispositif changeur est complet et autonome; il doit être couplé à la commande numérique du centre pour son déclenchement. Par cette troisième fonction, le dispositif changeur peut être limité au magasin et au moyen de démontage et de remontage des outils à son emplacement. Tous les autres moyens sont ceux du centre et l'automatisme se trouve alors réglé par le centre lui-même et sa commande numérique.

Le centre d'usinage selon l'invention comporte un magasin d'outils dont les cases sont disposées pour que leur direction de rangement et leur direction d'alignement mutuel soient parallèles aux axes des premier et deuxième éléments mobiles, la ou les broches tournantes de la tête orientable étant équipées d'un mandrin a prise automatique d'outil avec manchon libre coulissant de déverrouillage et le magasin coopérant avec un peigne oscillant à deux positions de verrouillage et de déverrouil lage respectivement, relié à un organe d'actionnement, tel qu'un vérin, ce peigne étant susceptible de repousser le manchon du mandrin de la broche sélectionnée en coopérant avec les éléments mobiles précités qui amènent, sous le contrôle de la commande numérique en application de consignes particulières de positionnement qui leur sont respectivement affectées cette broche en regard de la case du magasin sélectionnée pour y déposer ou y prendre un outil et la rapprochent ou l'éloignent du peigne.

Divers autres avantages de l'invention ressortent d'ailleurs de la description détaillée qui suit.

Une forme de réalisation de l'objet de l'invention est représentée, à titre d'exemple non limitatif, sur le dessin annexé.

Sur ce dessin:

- la figure 1 est une élévation latérale d'un centre de perçage de profilés, conforme à l'invention.
- la figure 2 est une élévation de face prise à plus grande échelle suivant la ligne II-II de la figure 1.
- la figure 3 est une coupe schématique de la tête orientable de perçage prise suivant la ligne III-III de la figure 2.
- les figures 4 à 7 sont des vues schématiques analogues à la figure 2, montrant les mouvements contrôlés par, les consignes de positionnement et d'avance d'usinage de la commande numérique, pour les deux éléments mobiles et la tête orientable, lorsqu'il s'agit, respectivement, de percer l'aile gauche, l'âme et l'aile droite du profilé parallèlement aux axes de la commande numérique (axes de déplacement) et de percer en oblique relativement à ces axes,
- la figure 8 est une vue de dessus prise suivant la ligne VIII-VIII de la figure 2, concernant le palpeur qui définit l'origine des positionnements verticaux relativement à un profilé quelconque.
- les figures 9A à 9D sont des vues schématiques prises à plus grande échelle suivant la ligne IX-IX de la figure 2 et illustrant de façon synoptique un changement d'outil.
- la figure 10 est une vue de dessus prise à plus petite échelle suivant la ligne X-X de la figure 8A et se rapportant au peigne du changeur d'outil qui provoque le verrouillage et le déverrouillage d'un outil relativement à la broche d'usinage amenée en regard de la case sélectionnée du magasin par la commande numérique.

- la figure 11 est une coupe d'un type de mandrin de perçage susceptible de coopérer avec le peigne précité, ce mandrin étant en positions déverrouillée et verrouillée respectivement dans la demi-coupe supérieure et la demi-coupe inférieure.

Le centre de perçage représenté sur le dessin comprend un convoyeur à rouleaux fous 1 prévu pour supporter chaque profilé 2 à percer. Ce profilé est déplaçable suivant son axe longitudinal, dénommé axe X, au moyen d'un chariot motorisé 3 portant une pince 4 destinée à saisir fermement l'extrémité dudit profilé pour lui transmettre le déplacement sans glissement. Le mouvement du chariot 3 est communiqué par un moteur intervenant sur un dispositif à pignon et crémaillère qui assure aussi la mesure précise des positions et ce moteur est piloté par la commande numérique du centre qui possède en mémoire des consignes de positionnement en X. Ainsi, le centre comporte un axe numérique X grâce auquel le profilé 2 peut être positionné avec une excellente précision en regard d'un foret 5.i se trouvant à un poste de perçage 6 à travers lequel ledit profilé se déplace.

Le poste de perçage 6 comporte un bâti fixe 7 constitué essentiellement par une traverse 8 s'étendant au-dessus du convoyeur 1 et orthogonalement à son axe X. Dans l'exemple représenté, la traverse est supportée par deux montants 9, 10 avec coffres, disposés de part et d'autre du convoyeur et d'un étau 11. Cet étau comprend un mors fixe 12 et un mors mobile de serrage 13 piloté par la commande numérique en relation avec l'axe X. Ces mors sont conformés en V pour laisser passage à l'équipage mobile portant les forets 5 et pour pincer le profilé 2 chacun de part et d'autre dudit équipage.

La traverse 8 présente une glissière à deux rails 14, 15 qui, dans l'exemple représenté, sont des barres rondes. Les rails sont destinés au guidage en translation, suivant l'axe transversal dénommé axe Y, d'un chariot 16 qui, à cet effet, est muni de paliers 14a, 15a, à coussinets, à circulation de billes ... Pour son déplacement, le chariot 16 comporte un moteur 17, entraînant un pignon 18 qui engrène avec une crémaillère 19 fixée à la traverse 8, ce dispositif d'entraînement ou "actionneur" 17 à 19 assurant aussi la mesure précise des positions. Le moteur 17 est piloté par la commande numérique du centre qui possède en mémoire des consignes de positionnement en Y et des consignes d'avance de perçage suivant le même axe. Ainsi, le centre comporte un axe numérique Y, non pas spécialisé, mais polyvalent puisqu'il peut obéir, dans le cadre du programme général de la commande numérique, à des consignes de positionnement seulement ou à des consignes d'avance de perçage seulement ou à d'autres consignes particulières décrites ci-après par exemple pour déterminer l'origine des mesures d'un profilé quelconque, pour mesurer la longueur réelle du foret utilisé, pour changer de foret etc ... Dès lors, le moteur 17 présente des caractéristiques universelles alliant la puissance à la précision, une plage de vitesse très étendue à une très grande souplesse de fonctionnement etc...

Le chariot 16 présente une glissière 20 pour le guidage en translation, suivant l'axe vertical dénommé axe Z, d'un coulisseau 21. Pour son déplacement, le coulisseau 21 comporte un moteur 22 entraînant un pignon 23 qui engrène avec une crémaillère 24 fixée au chariot. Le moteur 22 du coulisseau 21 possède les mêmes caractéristiques universelles que le moteur 17 du chariot 16; en outre, le dispositif d'entraînement 22 à 24 ou "actionneur" est piloté par un axe numérique Z obéissant, dans le cadre du programme général de la commande numérique, à des consignes de positionnement Z où à des consignes d'avance de perçage ou aux autres consignes particulières évoquées dans ce qui précède.

Le chariot 16 et le coulisseau 21 constituent donc deux éléments mobiles croisés dont les mouvements sont pilotés par les axes numériques Y et Z obéissant sélectivement aux consignes mémorisées précitées de positionnement et d'avance de perçage. Le programme général mobilise ces axes numériques pour obtenir les séquences de fonctionnement décrites dans ce qui suit.

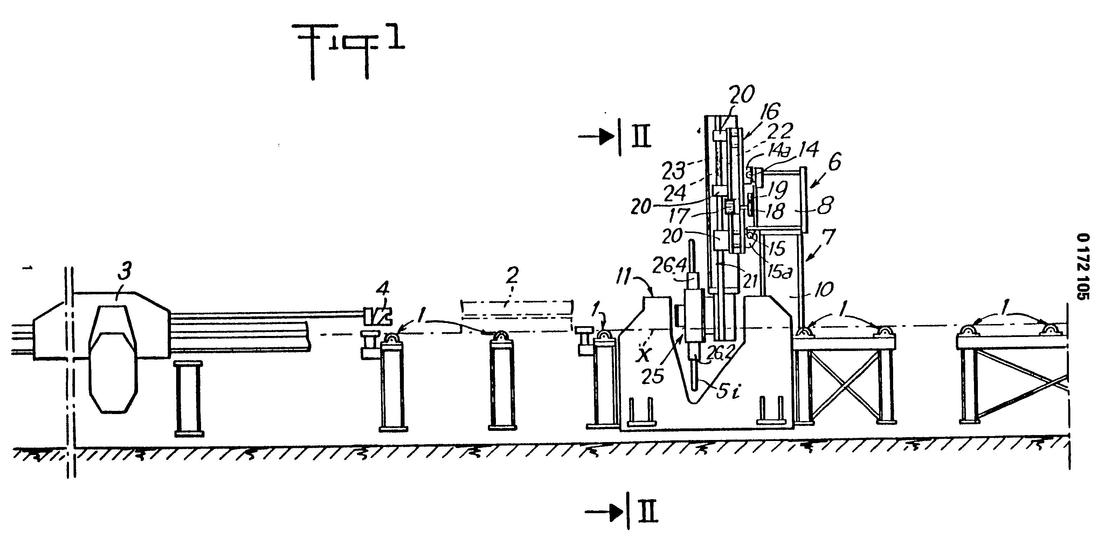

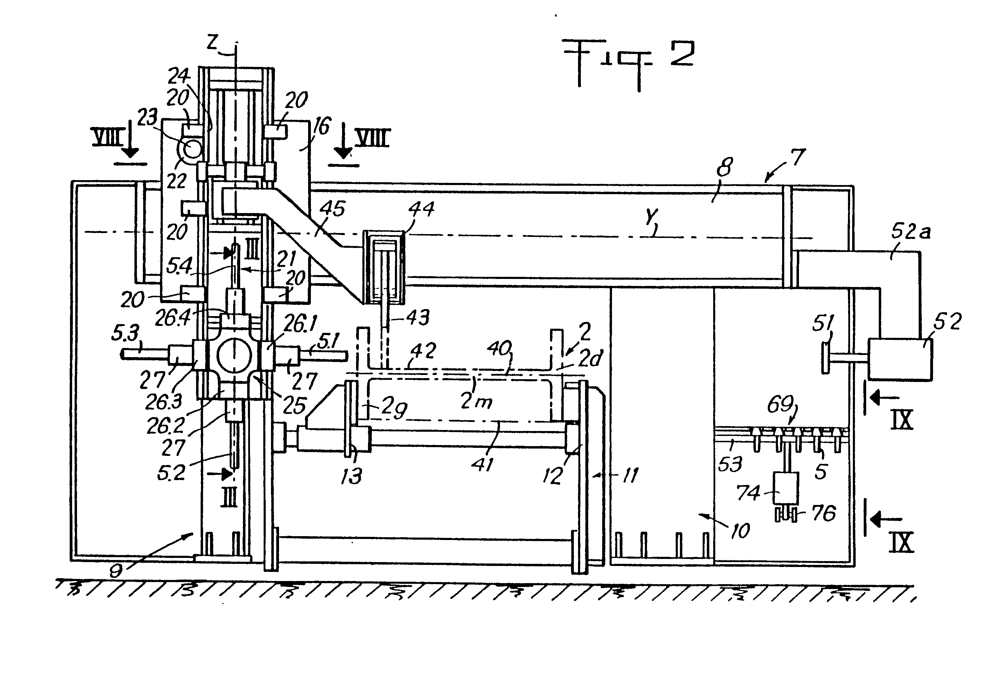

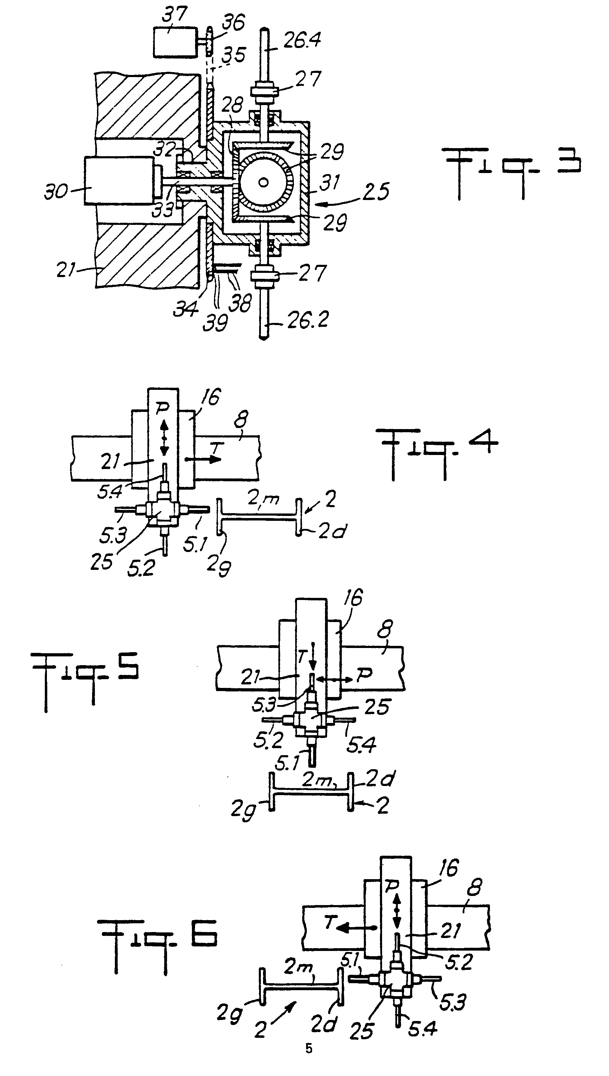

Enfin, le coulisseau 21 supporte une tête orientable de perçage 25 qui, dans l'exemple représenté, est munie de quatre broches de perçage 26.1 à 26.4 s'étendant radialement et perpendiculairement l'une à l'autre. Ces broches sont équipées de mandrins 27 (figure 11) pour le montage de forets 5.1 à 5.4. Elles sont entraînées en rotation synchrone toutes ensemble, par exemple par une couronne conique menante commune 28 en prise constante avec des pignons coniques 29 calés sur les broches (figure 3); cette couronne est accouplée à un groupe moto variateur de vitesse 30 fixé sur le coulisseau 21.

Par ailleurs, le boîtier 21 de la tête est monté tournant relativement au coulisseau 21 par l'intermédiaire d'une portée cylindrique 32 concentrique à l'arbre 33 de la couronne menante 28. L'orientation du boîtier 31 de la tête permettant de disposer le foret sélectionné si dans la bonne présentation en regard du profilé 2 est commandée par une couronne dentée 34 reliée par une chaîne 35 à un pignon 36 accouplé à un moteur 37. Ce dispositif est un "actionneur" et l'alimentation du moteur 37 est pilotée par la commande numérique en application de son programme général qui détermine également la vitesse de rotation du groupe 30 notamment. La commande numérique coopère avec des capteurs de position 38 disposés en regard de pistes 39 portées par la courorne 34 et permettant de définir la position angulaire réellement atteinte par la tête 25. Un verrou non représenté bloque la tête lorsque cette position est celle affichée au programme général.

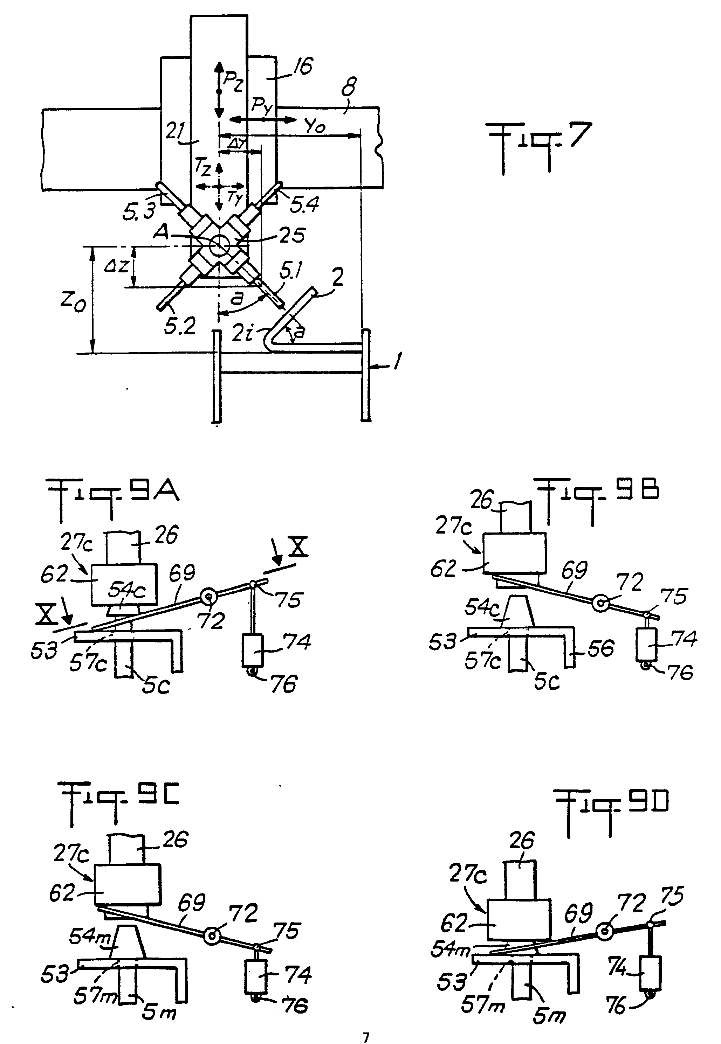

Ainsi, le centre d'usinage comporte uniquement un chariot horizontal 16 mobile en translation suivant l'axe Y, un coulisseau vertical 21 mobile en translation suivant l'axe Z et une tête porte-broches orientable 25 mobile en pivotement. La commande numérique pilote ces trois mouvements comme cela est décrit dans ce qui suit en se référant aux figures 4 à 7, étant rappelé que chacun des axes numériques Y et Z peut obéir indifféremment, mais en exécution des consignes générales du cycle, à des consignes particulières de positionnement, d'avance de perçage ou autres.

Dans l'exemple illustré par les figures 4 à 6, il s'agit de percer des trous dans un profilé 2 ayant une section en 1 et présentant alors deux ailes droite 2.d et gauche 2.g reliées par une âme médiane 2.m, ces perçages étant effectués par le seul équipage mobile 16, 21, 25. Pour les explications qui suivent, seul le forêt 26.1 est utilisé, ce qui correspond à un seul diamètre de perçage.

En exécution du programme général, le chariot 16 se place à gauche du profilé 2 pour mettre en oeuvre le perçage de l'aile gauche 2.g dudit profilé (figure 4). La tête 25 s'oriente et s'immobilise pour que le foret 5.1 soit horizontal et dirigé vers la droite. Le coulisseau 21 obéissant aux consignes de positionnement P de l'axe numérique Z descend ou monte pour rechercher le niveau de perçage et lorsqu'il l'a atteint avec précision, il s'immobilise. Puis, le chariot 16 obéissant aux consignes d'avance de perçage T de l'axe numérique Y avance vers la droite, alors que le foret 5.1 tourne, en application des consignes générales par lesquelles il a été choisi, à la vitesse appropriée. Lorsque le perçage est terminé, le chariot 16 recule jusqu'à ce que le foret 51 soit complètement dégagé. Si dans le plan d'usinage défini par l'axe X, ce perçage n'est pas suivi d'un autre, le cycle se poursuit par la recherche du perçage suivant dans l'âme 2.m.

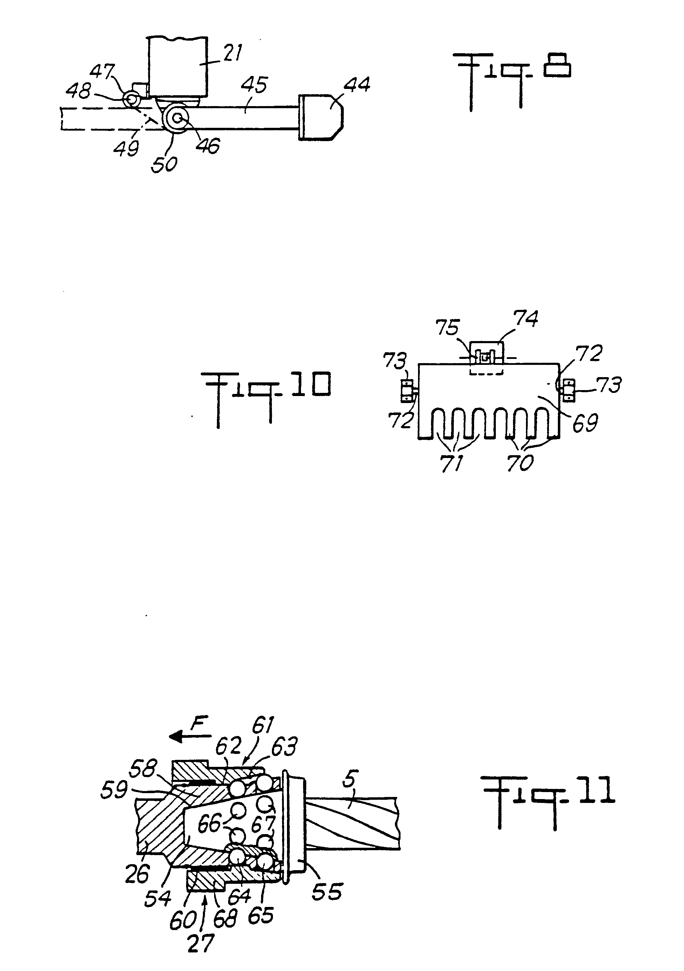

En exécution du programme général, le coulisseau 21 s'élève pour que les forets 5 de la tête 25 échappent au profilé 2. Comme le montre la figure 5, ladite tête 25 pivote, ses forets 5 continuant à tourner, pour que le foret 5.1 soit vertical et dirigé vers le bas. Le chariot 16 obéissant aux consignes de positionnement P de l'axe numérique Y se déplace vers la droite et lorsque la position atteinte détectée par les capteurs correspond à la position affichée, il s'immobilise. Puis, le coulisseau 21 obéissant aux consignes d'avance de perçage T de l'axe numérique Z descend et, lorsque le foret 5.1 a complètement percé son trou, s'arrête et remonte. Si dans ce plan d'usinage défini par l'axe X (figures 4 à 6), le perçage qui vient d'être pratiqué n'est pas suivi d'un autre, le cycle se poursuit par la recherche du perçage suivant dans l'aile droite 2.d.

En exécution du programme général, le coulisseau 21 continue sa montée et le chariot 16 reprend sa translation vers la droite pour que la tête 25 échappe au profilé 2. Comme le montre la figure 6, ladite tête 25 pivote, ses forets 5 continuant à tourner, pour que le foret 51 soit horizontal et dirigé vers la gauche. Le coulisseau 21 obéissant aux consignes de positionnement P de l'axe numérique Z descend ou monte jusqu'à ce que le niveau de perçage soit atteint par avance rapide et recherche lente de précision, puis il s'immobilise. Le chariot 16 obéissant aux consignes d'avance de perçage T de l'axe numérique Y avance vers la gauche alors que le foret 5.1 tourne à la vitesse appropriée définie par son choix selon les consignes générales de la commande numérique. Lorsque le perçage est terminé, le chariot 16 recule jusqu'à dégagement complet du foret et si ce perçage n'est pas suivi d'un autre dans le plan X, l'équipage mobile 16, 21, 25 devient disponible pour un nouveau cycle se déroulant dans un autre plan transversal après desserrage du profilé 2 par l'étau 11, déplacement dudit profilé par l'axe numérique X et resserrage.

Dans le cycle évoqué ci-dessus, la tête 25 ne fonctionne qu'avec un seul foret 5.1 et tout se déroule par conséquent comme si ladite tête ne comporte qu'une seule broche de percage, mais peut pivoter de 90° en 90° pour présenter ce foret dans l'une quelconque des trois positions précitées: vers la droite, vers le bas, vers la gauche.

Dans l'exemple représenté, la tête comporte quatre broches 26.1 à 26.4 susceptibles d'être équipées de quatre forets différents 5.1 à 5.4. Dans ce cas, le pivotement de la tête tient compte pour passer d'une phase de perçage a une autre (figures 4 à 5 ou 5 à 6) non seulement de l'orientation nouvelle du foret, mais également de l'orientation, pendant la phase qui vient de se terminer, du foret sélectionné pour la nouvelle phase à venir. Ce sont les consignes générales du programme de la commande numérique qui ordonnent et pilotent le pivotement convenable.

Toujours dans l'exemple représenté, la tête 25 pivote par séquences de 90°, étant donné que le chariot 16 et le coulisseau 21 s'étendent perpendiculairement l'un à l'autre. Mais si ces deux éléments mobiles 16, 21 sont croisés suivant un angle différent, la commande de cette tête est asservie à cet angle pour que le foret 5 sélectionné se place, après pivotement, perpendiculairement à la partie de la pièce à percer.

Mais plus généralement, quel que soit l'angle de croisement des éléments mobiles 16, 21, il est possible de percer en biais; par exemple et ainsi que cela ressort de la figure 7, il est possible de percer perpendiculairement à l'aile inclinée 2i d'un profilé en V 2. Dans ce cas, l'unité de calcul de la commande numérique détermine le point A où doit se trouver l'axe de pivotement de la tête orientable 25 pour que le foret 5.1 sélectionné, en avançant suivant son axe après que ladite tête ait été orientée suivant l'angle "a" qui est celui de l'aile 2i du profilé, perce ladite aile au point prévu sur le plan. L'unité de calcul ayant déterminé les coordonnées Yo et Zo de ce point A par rapport aux plans de référence du convoyeur 1, l'axe numérique Y déplace le chariot 16 jusqu'à ce que la cote Yo soit atteinte avec précision et l'axe numérique Z déplace le coulisseau 21 jusqu'à ce que la cote Zo soit elle-même atteinte. Les axes numériques Y et Z ont obéi aux consignes de positionnement Py et Pz définies par l'unité de calcul.

Il faut maintenant, la tête 25 étant orientée à l'angle "a", que ces axes numériques Y et Z pilotent le chariot 16 et le coulisseau 21 pour qu'ils avancent de façon coordonnée suivant la règle

$$\frac{\Delta Z}{\Delta Y} = tga = \frac{V_Z}{V_Y}$$

Les axes numériques Y et Z ont obéi aux consignes d'avance de perçage Ty et Tz définies par l'unité de calcul et les avances sont contrôlées en permanence par les capteurs de position Y et Z répétant les mesures à intervalles réguliers les plus faibles possibles, par exemple de l'ordre du 1/100ème de mm, ces avances pouvant être corrigées aussi fréquemment.

Le centre de perçage permet, en mettant en oeuvre ses éléments mobiles 16, 21 et la tête 25, ainsi que les axes numériques Y et Z principalement qui les pilotent (la commande numérique intervenant également par ses consignes générales), de réaliser d'autres fonctions.

Trois de ces fonctions sont décrites dans ce qui suit, à titre d'exemples non restrictifs, en se référant aux figures 2 et 8; 2; 2, 9A à 9D, 10 et 11 respectivement.

Une première fonction complémentaire est de déterminer dans le profilé 2 à percer, la surface fictive de référence 40 (figure 2) relativement à laquelle les perçages sont cotés et doivent être mesurés par l'axe numérique Z. La distance de cette surface 40 au plan de roulement 41 du convoyeur 1 dépend de la section du profilé 2 dont les dimensions normalisées sont mémorisées. Mais du fait que le profilé n'est pas parfaitement rectiligne et que les perçages doivent être exécutés avec une grande précision, il est prévu dans les centres de perçage de détecter la surface supérieure 42 de l'âme 2.m et de déduire de sa cote de niveau, la demi-épaisseur de cette âme pour obtenir l'origine des mesures à prendre en mémoire pour l'axe numérique Z.

Le centre de perçage comporte donc un palpeur 43 de préférence du type électrique et escamotable dans un boîtier 44, la position escamotée étant représentée en trait plein et la position en service étant représentée en trait interrompu. Le boîtier 44 est porté en bout par un bras 45 monte pivotant, à son autre extrémité, au moyen d'un arbre 46 relativement au coulisseau vertical 21. Le bras 45 est susceptible d'occuper deux positions alignées s'étendant parallèlement à la traverse 8 du bâti. Dans l'une des positions illustrée en trait plein sur les figures 2 et 8, le bras 45 est dirigé vers la droite afin que le palpeur 43 détecte au plus près de l'aile gauche 2.g du profilé lorsque l'équipage mobile est dans la position schématisée sur la figure 4, tandis que dans la position opposée amorcée en trait mixte sur la figure 8, le bras 45 est dirigé vers la gauche afin que le palpeur 43 détecte au plus près de l'aile droite 2.d du profilé lorsque l'équipage mobile est dans la position schématisée sur la figure 6. Pour passer de l'une à l'autre de ces positions du bras 45, est prévu un "actionneur" constitué par un moteur 47 dont l'arbre menant est accouplé à un pignon 48 relié par une chaîne 49 à un autre pignon 50 calé sur l'arbre 46 du bras 45.

Lorsqu'il s'agit de percer des trous dans l'aile gauche 2.g du profilé, les consignes générales de la commande numérique provoquent la mise du bras 45 dans la position illustrée par les figures 2 et 8. Ces mêmes consignes générales connaissant la section du profilé 2 à percer ont en mémoire la distance du palpeur 43 au mors fixe de référence 12 de l'étau 11 pour que ce palpeur puisse détecter au plus près de l'arrondi qui relie l'aile gauche 2.g de l'âme 2.m. Dès lors que cette distance est connue, l'axe numérique Y en est informé par des consignes de positionnement particulières qui permettent de déplacer le chariot 16 jusqu'à ce que le palpeur 43 ait atteint la position choisie. Puis des consignes de positionnement également particulières sont appliquées à l'axe numérique Z pour que le coulisseau 21 descende. Le palpeur 43 étant sorte, dès qu'il entre en contact avec la surface 42 de l'âme 2.m, il envoie un signal électrique au centre de calcul de la commande numérique afin que celui-ci exploite ce signal pour déterminer l'origine des mesures à effectuer durant la phase de perçage selon la figure 4. La mise en mémoire de cette origine de mesure étant effectuée, le palpeur 43 est escamoté et l'unité de perçage 16, 21, 25 fonctionne alors comme indiqué dans ce qui précède en se référant à la figure 4. Lorsqu'il s'agit d'exécuter la phase de perçage selon la figure 6, la même détection de l'origine des mesures est effectuée près de l'aile droite 2.d, mais le bras 45 s'étend alors dans la direction opposée représentée en trait interrompu sur la figure 8.

Une deuxième fonction complémentaire réside dans la détection de la longueur réelle d'un foret et dans sa mise en mémoire automatique sous le contrôle de la commande numérique. A cet effet, ainsi que cela ressort de la figure 2, un palpeur 51 de préférence électrique est monté coulissant sur amortisseur dans un boîtier 52 fixé par l'intermédiaire d'un support 52a en bout de la traverse 8. Ce palpeur 51 est susceptible de se déplacer parallèlement à la traverse. Dès lors, une consigne générale spécifique de la commande numérique provoque l'orientation de la tête 25 pour que le foret à mesurer s'étende horizontalement vers la droite et la mémoire de la commande numérique se trouve mobilisée pour prendre en compte les mesures ultérieures concernant ce foret. Pour cette fonction de mesure de longueur, une consigne particulière d'avance d'usinage est affectée à l'axe numérique Z et provoque le déplacement vertical du coulisseau 21 jusqu'à ce que ledit foret sélectionné ait atteint le niveau du palpeur 51. Enfin, une consigne particulière de positionnement est affectée à l'axe numérique Y pour que le chariot 16 se déplace vers la droite et compte à rebours son déplacement, par exemple avec une origine correspondant à l'absence de foret dans la broche ou à un foret témoin dans ladite broche. Lorsque le palpeur 51 envoie dans ce cas un signal de contact, la mesure effectuée correspond à la longueur utile du foret. Cette longueur est prise en conséquence par la mémoire de la commande numérique afin de déterminer les courses de positionnement dans les phases d'usinage selon les figures 4 à 7.

Une troisième fonction complémentaire est le changement automatique d'outil. Il s'agit de simplifier le changeur en utilisant pour l'exécution des mouvements, l'équipage mobile 16, 21 et 25 du centre de perçage et la commande numérique qui y est associée.

Le changeur comporte un magasin 53 (figure 2, 9A à 9D) destiné à recevoir des forets 5 ou autres outils à queue conique 54 avec collerette intermédiaire 55. Le magasin 53 est une plaque horizontale solidaire d'un rebord vertical de fixation 56 et la plaque délimite des orifices 57 dans lesquels sont normalement déposés les forets 5 pour qu'ils reposent, queue en l'air, par leur collerette 55 sur ladite plaque. Les orifices 57 constituent donc des cases de rangement dont les axes verticaux sont parallèles à l'axe numérique Z et s'étendent cote à cote dans une direction d'alignement parallèle à l'axe numérique Y.

Le magasin 53 est destiné à être desservi par l'équipage mobile 16, 21, 25 du centre dont les mandrins 27 des broches tournantes 26.1 à 26.4 de la tête 25 sont du type à verrouillage et déverrouillage automatiques sans arrêt de la rotation. Un mandrin de ce type est illustré, à titre d'exemple, par la figure 11. Il comporte un corps creux 58 délimitant un logement 59 pour la queue 54 d'un foret 5. Sur le corps 58 est monté fou en rotation et libre en translation, par l'intermédiaire d'un palier à billes 60, un manchon de commande 61. Le manchon 61 délimite un alésage cylindrique 62 et un alésage conique divergent 63 formant des portées d'actionnement pour deux couronnes de billes 64 et 65 prisonnières, avec jeu radial, du corps 58. Lorsque le manchon de commande 61 est en position de verrouillage (moitié inférieure de la figure 11), les billes 64 et 65 sont repoussées vers le centre par les portées 62 et 63 et pénètrent dans des cuvettes 66 et 67 de la queue 54 en assurant ainsi l'accouplement de celle-ci avec le corps 58. Par contre, lorsque le manchon de commande 61 est en position de déverrouillage (moitié supérieure de la figure 11), les billes 64 et 65 sont appliquées par la force

...ntrifuge et éventuellement par un moyen
é...stique contre la portée conique 63 en
é... nappant alors aux cuvettes 66 et 67 et en
n'assurant plus l'accouplement précité. Pour
passer de la position de verrouillage à la position
de déverrouillage, il suffit de déplacer le
manchon 61 en translation axiale dans le sens de
la flèche F, la translation dans le sens opposé
provoquant le verrouillage. Pour provoquer cette
translation, le manchon 61 présente en saillie une
collerette 68.

Le magasin 53 du changeur coopère avec un
peigne oscillant 69 (figure 10) dont les dents 70
sont séparées par des évidements 71. Pour
déverrouiller un foret 5, il faut emboîter le
manchon 61 dans l'évidement 71 sélectionné,
appliquer les dents 70 voisines de cet évidement
contre la collerette 68 de ce manchon et soulever
celui-ci alors que le corps 58 tourne à niveau
constant. Le peigne 69 est monté pivotant dans
sa zone médiane par des axes 72 portés par des
paliers fixes 73. Ces paliers sont disposés de
façon que les évidements 71 du peigne soient
toujours situés en regard des orifices ou cases 57
du magasin. A son extrémité opposée aux dents,
ce peigne est relié à un organe d'actionnement,
tel qu'un vérin 74 dont les éléments coulissants:
cylindre et tige de piston, sont articulés par un
axe 75 en bout du peigne et par un axe 76 sur le
bâti fixe (figures 2, 9A à 9D et 10). L'organe
d'actionnement 74 provoque le pivotement du
peigne 69 pour qu'il occupe soit une position
inclinée basse (figures 9A et 9D) soit une position
inclinée haute (figures 9B et 9C).

Le fonctionnement du changement
automatique d'outils est décrit ci-après en se
référant aux figures 9A à 9D. Sur ces figures, le
mandrin 27, l'outil 5, le magasin 53 et le peigne 69
sont schématisés pour une meilleure
compréhension des séquences. C'est ainsi que
les collerettes 55 de l'outil et 68 du manchon ne
sont pas représentées, mais elles sont cependant
désignées dans l'exposé du fonctionnement d'un
cycle de changement d'outil.

Les consignes particulières de changement
d'outil du programme général de la commande
numérique sélectionnent le foret à changer 5c et
l'orifice 57c ou case du magasin 53 dans lequel ce
foret doit être déposé. Ces consignes
particulières mobilisent la tête orientable 25 pour
mettre la broche 26 du foret 5c en position
verticale vers le bas et le peigne 69 pour le placer
en position basse (figure 9A). Ces mêmes
consignes particulières sont transférées aux axes
numériques Y et Z pour déplacer le chariot 16
jusqu'à ce que le foret 5c soit en regard de
l'orifice 57c et pour déplacer le coulisseau 21
jusqu'à ce que ledit foret 5c soit engagé dans
ledit orifice 57c dans cette dernière position, la
collerette 62 du manchon 61 du mandrin 27c est
voisine du peigne 69.

Les consignes particulières mobilisent le
peigne 69 pour qu'il pivote vers la position haute
(figure 9B). Le coulisseau 21 étant immobilisé, le
manchon 61 monte et le mandrin 27c libère le
foret 5c.

Les consignes particulières sollicitant à
nouveau les axes numériques Y et Z pour que le
coulisseau 21 s'élève, le chariot 16 se déplace
vers l'orifice 57m où se trouve le nouvel outil à
monter 5m et le coulisseau 21 s'abaisse.

La collerette 62 du manchon 61 du mandrin 27c
rencontre le peigne 69 en position haute (figure
9c) et la descente du coulisseau 21, donc du
corps 58 relativement au manchon fixe, se
poursuit jusqu'à ce que le déverrouillage soit
accompli dans cette position, le corps 58 coiffe la
queue conique 54 du nouvel outil à monter 5m.

Les consignes particulières mobilisent alors le
peigne 69 pour qu'il pivote vers la position basse
(figure 9D). Le manchon 61 descend et verrouille
le mandrin 27c sur l'outil 5m.

Les axes numériques Y et Z sont à nouveau
sollicités par les consignes particulières pour
élever le coulisseau 21 et déplacer le chariot 16
vers le profilé 2.

L'invention n'est pas limitée à la forme de
réalisation représentée et décrite en détail, car
diverses modifications peuvent y être apportées
sans sortir de son cadre. En particulier, des
usinages autres que le perçage peuvent être
exécutés.

**Revendications**

1. Centre d'usinage ponctuel de profilés, à
commande numérique, comprenant un convoyeur
(1) pour supporter chaque profilé (2), un chariot
motorisé (3) piloté par la commande numérique,
une pince (4) portée par le chariot pour saisir et
déplacer le profilé considéré suivant l'axe X, au
moins un étau (11) pour immobiliser le profilé au
poste d'usinage, un bâti fixe (7) à ce poste, au
moins un outil d'usinage (5) et des moyens
guidés sur le bâti fixe et motorisés sous la
dépendance, pour certains, de la commande
numérique pour le positionnement et l'avance
d'usinage de ces outils suivant des axes
angulaires Y et Z situés dans un plan faisant un
angle de préférence droit avec l'axe X,
caractérisé:

- en ce que les moyens précités sont constitués
uniquement par une seule unité d'usinage
comprenant, d'une façon connue en soi, deux
éléments mobiles en translations croisées (16,
21), le premier (16) étant mobile par rapport au
bâti fixe (7) et le deuxième (21) par rapport au
premier (16), ce deuxième élément mobile (21)
portant une tête orientable d'usinage (25)
équipée d'au moins un outil (5),

- et en ce que chacun des deux éléments
mobiles (16, 21) étant commandé en déplacement
par un actionneur (17, 22), chacun des deuxdits
actionnours est polyvalent en particulier pour
pouvoir avancer à faible puissance suivant une
plage de vitesse étendue et avec précision lors
d'un positionnement ou avancer à puissance
élevée et vitesse limitée lors d'un usinage, actionneur considéré de chaque élément mobile étant alors piloté par la commande numérique de façon sélective dans le cadre de son programme général pour exécuter notamment des consignes exclusives de positionnement, des consignes exclusives d'avance d'usinage ou des consignes combinées, ce qui permet à cette unité d'usinage unique à deux éléments mobiles en translation et à tête orientable de pouvoir être déplacée pour le positionnement suivant l'axe Y et suivant l'axe Z, et de pouvoir être déplacée pour l'avance d'usinage au moins deux directions par rapport au bâti fixe (7) en sélectionnant l'élément auquel les consignes de positionnement sont affectées et celui auquel les consignes d'avance d'usinage sont elles-même affectées.

2. Centre d'usinage selon la revendication 1, caractérisé en ce que le premier élément mobile (16) est à axe de déplacement horizontal et le deuxième (21) est à axe de déplacement vertical.

3. Centre d'usinage selon la revendication 2, caractérisé en ce que la tête orientable (25) est une tourelle à quatre broches d'usinage (26.1 à 26.4) perpendiculaires entre elles deux à deux et, de préférence, entraînées ensemble en rotation.

4. Centre d'usinage selon l'une quelconque des revendications 1 à 3, caractérisé en ce que le premier et le deuxième éléments mobiles (16, 21) sont susceptibles d'être asservis indifféremment, l'un à des consignes de positionnement et l'autre à des consignes d'avance d'usinage.

5. Centre d'usinage selon l'une quelconque des revendications 1 à 3, caractérisé en ce que l'un au moins quelconque des deux éléments mobiles (16, 21) est susceptible d'être asservi à des consignes de positionnement définies par le calcul de la position de départ de la course d'usinage, tandis que les deux éléments mobiles (16, 21) sont susceptibles d'être asservis à des consignes d'avance d'usinage coordonnées déterminées par la pente de la course d'usinage.

6. Centre d'usinage selon l'une quelconque des revendications 1 à 3, comprenant un palpeur escamotable (43) qui suit la partie supportant la broche d'usinage et qui est destiné à détecter par contact avec le profilé la surface fictive de référence relativement à laquelle la cote des usinages est prise, caractérisé en ce que le palpeur escamotable (43) est porté par le deuxième élément mobile (2) par l'intermédiaire d'un bras pivotant (45) permettant de détecter par la droite ou par la gauche, de façon qu'en fonction du programme, ce premier élément mobile (16) piloté par la commande numérique en application des consignes de positionnement amène ce palpeur à la distance des ailes (2g, 2d) du profilé (2) la mieux appropriée à la mesure et que le deuxième élément mobile (21) piloté par la commande numérique en application des consignes de positionnement amène ledit palpeur au contact de l'âme (2m) du profilé, la cote de contact étant alors prise en compte par l'unité de calcul de la commande numérique pour déterminer l'origine des mesures ultérieurement définies par les consignes de positionnement, puis le palpeur étant escamoté et les deux éléments mobiles étant pilotés par la commande numérique en positionnement et usinage pour l'exécution d'un nouveau cycle d'usinage.

7. Centre d'usinage selon l'une quelconque des revendications 1 à 3, caractérisé en ce qu'il comprend un moyen de détection et de mise en mémoire de la longueur réelle d'un outil chaque changement d'outil, ce moyen comportant un palpeur (51) de préférence électrique, monté à position fixe sur amortisseur (52) et la commande numérique permettant d'orienter la tête porte-outil (25), de l'amener en regard du palpeur (51) par te deuxième élément mobile (21) piloté suivant une consigne particulière d'avance d'usinage et de la déplacer vers le palpeur (51) par le premier élément mobile (16) piloté suivant une consigne particulière de positionnement de façon à mesurer dès le contact la différence de course par rapport à un outil témoin ou une absence d'outil.

8. Centre d'usinage selon l'une quelconque des revendications 1 à 3, caractérisé en ce qu'il comporte un magasin d'outils (53) dont les cases (57) sont disposées pour que leur direction de rangement leur direction d'alignement mutuel soient parallèles aux axes de mouvement des premier et deuxième éléments mobiles (16, 21) la ou les broches tournantes (26) de la tête orientable, (25) étant équipées d'un mandrin à prise automatique d'outil (27) avec manchon libre coulissant (61) de déverrouillage et le magasin (53) coopérant avec un peigne oscillant (69) à deux positions de verrouillage et de déverrouillage respectivement, relié à un organe d'actionnement, tel qu'un vérin (74), ce peigne étant susceptible de repousser le manchon du mandrin de la broche sélectionnée en coopérant avec les éléments mobiles précités qui amènent, sous le contrôle de la commande numérique en application de consignes particulières de positionnement qui leur sont respectivement affectées cette broche en regard de la case du magasin sélectionnée pour y déposer (57c) ou y prendre (57m) un outil (5) et la rapprochent ou l'éloignent du peigne.

9. Centre d'usinage selon la revendication 8, caractérisé en ce que les cases (57) du magasin (53) et les évidements (7) du peigne ( 69) sont orientés parallèlement à l'axe du deuxième élément mobile (21) précité et sont alignés parallèlement à l'axe du premier élément mobile (16), la commande numérique ayant en mémoire des consignes de positionnement dudit premier élément mobile pour la recherche des cases et des consignes de positionnement dudit deuxième élément mobile et du peigne pour le déverrouillage et le verrouillage d'un outil.

**Patentansprüche**

1. Bearbeitungszentrum mit numerischer Steuerung zur punktuellen Bearbeitung von Profilen, umfassend eine Fördereinrichtung (1) zum Abstützen jedes Profils (2), einen von der numerischen Steuerung gesteuerten motorbetriebenen Schlitten (3), eine vom Schlitten getragene Zange (4) zum Erfassen und Verschieben des betreffenden Profils entlang der Achse X, mindestens einen Schraubstock (11) zum Feststellen des Profils an der Bearbeitungsstation, einen ortsfesten Rahmen (7) an dieser Station, mindestens ein Bearbeitungswerkzeug (5) und am ortsfesten Rahmen geführte und in Abhängigkeit von der numerischen Steuerung zur Positionierung bzw. zum Bearbeitungsvorschub dieser Werkzeuge entlang den in einer mit der Achse X vorzugsweise einen rechten Winkel einschließenden Ebene befindlichen Winkelachsen Y und Z jeweils motorbetriebene Mittel, dadurch gekennzeichnet:

- daß die genannten Mittel ausschließlich aus einer einzigen Bearbeitungeinheit bestehen, umfassend auf an sich bekannte Weise zwei kreuzweise translatorisch verschiebbare bewegliche Elemente (16, 21), wobei das erste (16) gegenüber dem ortsfesten Rahmen (7) und das zweite (21) gegenüber dem ersten (16) beweglich ist, welches zweite bewegliche Element (21) einen ausrichtbaren Bearbeitungskopf (25), der mit mindestens einem Werkzeug (5) ausgestattet ist, trägt,

- und daß jedes der beiden beweglichen Elemente (16, 21) von einem Betätigungsorgan (17, 22) bezüglich der Verschiebung gesteuert ist, wobei jedes der beiden Betätigungsorgane mehrere Funktionen hat, insbesondere zur Ermöglichung eines Vorschubs mit geringer Leistung entsprechend einem weiten Geschwindigkeitsbereichs und mit Präzision bei einer Positionierung oder eines Vorschubs mit höherer Leistung und begrenzter Geschwindigkeit während einer Bearbeitung, wobei das betreffende Betätigungsorgan jedes beweglichen Elements von der numerischen Steuerung im Rahmen ihres allgemeinen Programms selektiv gesteuert wird, um insbesondere exklusive Positionierungsanweisungen, exklusive Bearbeitungsvorschubanweisungen oder kombinierte Anweisungen auszuführen, wodurch dieser einzigen Bearbeitungseinheit mit zwei translatorisch beweglichen Elementen und ausrichtbarem Kopf ermöglicht wird, entlang der Achse Y und entlang der Achse Z zwecks Positionierung und in mindestens zwei Richtungen gegenüber dem ortfesten Rahmen (7) zwecks Bearbeitungsvorschub verschoben zu werden, durch Auswahl des Elements, dem die Positionierungsanweisungen und des Elements, dem die Bearbeitungsvorschubanweisungen selbst zugeordnet sind.

2. Bearbeitungszentrum nach Anspruch 1, dadurch gekennzeichnet, daß das erste bewegliche Element (16) eine horizontale Verschiebachseund das zweite bewegliche Element (21) eine vertikale Verschiebeachse aufweist.

3. Bearbeitungszentrum nach Anspruch 2, dadurch gekennzeichnet, daß der ausrichtbare Kopf (25) ein Aufbau mit vier Bearbeitungsspindeln (26.1 bis 26.4) ist, von denen jeweils zwei zueinander senkrecht stehen und die vorzugsweise gemeinsam rotationsbetrieben sind.

4. Bearbeitungszentrum nach einem der Ansprüche 1 bis 3, dadurch gekennzeichnet, daß das erste und das zweite bewegliche Element (16, 21) unterschiedlich regelbar sind, das eine aufgrund von Positionierungsanweisungen und das andere aufgrund von Bearbeitungsvorschubanweisungen.

5. Bearbeitungszentrum nach einem der Ansprüche 1 bis 3, dadurch gekennzeichnet, daß zumindest irgendeines der beiden beweglichen Elemente (16, 21) aufgrund von Positionierungsanweisungen regelbar ist, die durch Berechnung der Ausgangsposition des Bearbeitungsweges festgelegt sind, während beide beweglichen Elemente (16, 21) aufgrund von koordinierten Bearbeitungsvorschubanweisungen geregelt sind, welche durch den Richtungskoeffizienten des Bearbeitungsweges bestimmt sind.

6. Bearbeitungszentrum nach einem der Ansprüche 1 bis 3, umfassend einen einziehbaren Fühler (43), der dem die Bearbeitungsspindel tragenden Teil folgt und zum Abtasten der fiktiven Referenzfläche, auf die sich die Bearbeitungsseite bezieht, durch Kontakt mit dem Profil bestimmt ist, dadurch gekennzeichnet, daß der einziehbare Fühler (43) vom zweiten beweglichen Element (21) mittels eines die Abtastung von rechts oder von links gestattenden Schwenkarmes (45) getragen ist, sodaß bei Ablauf des Programms das erste, von der numerischen Steuerung unter Anwendung der Positionierungsanweisungen angesteuerte bewegliche Element (16) den Fühler in die von den Flügeln (2g, 2d) des Profils (2) für die Messung am besten geeignete Distanz bringt, und daß das zweite, von der numerischen Steuerung unter Anwendung der Positionierungsanweisungen angesteuerte bewegliche Element (21) den Fühler in Kontakt mit dem Steg (2m) des Profils bringt, wobei dann die Kontaktseite von der Recheneinheit der numerischen Steuerung zur Bestimmung des Ausgangswerts der von den Positionierungsanweisungen festgelegten darauffolgenden Messungen zur Berechnung herangezogen wird, sodann der Fühler eingezogen wird und die beiden beweglichen Elemente zur Ausführung eines neuen Bearbeitungszyklus von der numerischen Steuerung zur Positionierung und Bearbeitung angesteuert werden.

7. Bearbeitungszentrum nach einem der Ansprüche 1 bis 3, dadurch gekennzeichnet, daß es ein Mittel zum Abtasten und Speichern der effektiven Länge eines Werkzeugs bei jedem Werkzeugwechsel umfaßt, welches Mittel einen vorzugsweise elektrischen Fühler (51) umfaßt, der in feststehender Position auf Dämpfer (52) gelagert ist, wobei die numerische Steuerung das Ausrichten des Werkzeugträgerkopfes (25), die Anordnung desselben gegenüber dem Fühler (51) mittels des entsprechend einer speziellen Bearbeitungsvorschubanweisung angesteuerten zweiten beweglichen Elements (21) und die Verschiebung desselben zum Fühler (51) mittels des entsprechend einer speziellen Positionierungsanweisung angesteuerten ersten beweglichen Elements (16) gestattet, sodaß ab dem Kontakt die Wegdifferenz gegenüber einem Kontrollwerkzeug oder einer Werkzeugabsenz gemessen wird.

8. Bearbeitungszentrum nach einem der Ansprüche 1 bis 3, dadurch gekennzeichnet, daß es ein Werkzeugmagazin (53) umfaßt, dessen Fächer (57) so angeordnet sind, daß ihre Zuweisungsrichtung und ihre gegenseitige Ausrichtungsrichtung parallel zu den Bewegungsachsen des ersten und zweiten beweglichen Elements (16, 21) sind, wobei die Drehspindel(n) (26) des ausrichtbaren Kopfes (25) mit einem Dorn zur automatischen Werkzeugaufnahme (27) mit frei gleitender Freigabemuffe (61) versehen sind und das Magazin (53) mit einem oszillierenden Kamm (69) mit zwei Positionen, nämlich einer Festklemm- und einer Freigabeposition, zusammenwirkt, welcher Kamm mit einem Betätigungsorgan, wie einem Stelltrieb (74), verbunden ist und die Muffe des Dorns der ausgewählten Spindel unter Zusammenwirken mit den genannten beweglichen Elementen zurückschieben kann, wobei letztere unter Kontrolle der numerischen Steuerung unter Anwendung von ihnen jeweils zugeordneten speziellen Positionierungsanweisungen diese Spindel gegenüber das ausgewählte Fach des Magazins bringen, um dort ein Werkzeug (5) abzulegen (57c) oder zu entnehmen (57m), und sie dem Kamm näherbringen oder davon entfernen.

9. Bearbeitungszentrum nach Anspruch 8, dadurch gekennzeichnet, daß die Fächer (57) des Magazins (53) und die Zwischenräume (71) des Kamms (69) parallel zur Achse des zweiten beweglichen Elements (21) gerichtet und parallel mit der Achse des ersten beweglichen Elements (16) ausgerichtet sind, wobei die numerische Steuerung Positionierungsanweisungen für das erste bewegliche Element zum Suchen der Fächer und Positionierungsanweisungen für das zweite bewegliche Element und den Kamm zur Freigabe und zum Festklemmen eines Werkzeugs gespeichert hat.

## Claims

1. Numerical-control punctual machining center for structural sections, comprising a conveyor (1) for supporting each section (2), a motor-driven carriage (3) driven by the numerical control, a gripper (4) carried by the carriage for gripping and moving said section in the direction of axis X, at least one vise (11) for immobilizing the section at the machining station, a frame (7) stationary at said station, at least one machining tool (5) and means guided on the stationary frame and motor-driven, under the control, for some of them, of the numerical control for the machining positioning and progress of said tools according to angular axes Y and Z situated in a plane forming preferably a right angle with axis X, characterized:
   - in that said means are solely constituted by a single machining unit comprising, in manner known per se, two elements movable in crossed translations (16, 2), the first (16) being movable with respect to the stationary frame (7) and the second (21) with respect to the first (16), said second movable element (21) carrying an orientable machining head (25) equipped with at least one tool (5),
   - and in that, each of the two movable elements (16, 21) being controlled in its movement by an actuator (17, 22), each one of said two actuators is polyvalent in particular, so as to be able to progress under low power according to a wide range of speeds and with accuracy for a positioning, or to progress under high power and at limited speed through a machining operation, the actuator of each movable element being then under the selective control of the numerical control, within the general program thereof, to carry out for example exclusive positioning instructions, exclusive machining progress instructions, or combined instructions, this enabling said single machining unit with two elements movable in translation and an orientable head, to be moved for positioning, along axis Y and along axis Z, and to be moved for the machining in at least two directions with respect to the stationary frame (7), by selecting the element to which the positioning instructions are directed and that to which the machining progress instructions are directed.

2. Machining center according to claim 1, characterized in that, the first movable element (16) has a horizontal moving axis, and the second (21) has a vertical moving axis.

3. Machining center according to claim 2, characterized in that the orientable head (25) is a turret head with four machining spindles (26.1 to 26.4) which are perpendicular in pairs and preferably driven together in rotation.

4. Machining center according to any one of claims 1 to 3, characterized in that the first and second movable elements (16, 21) are adapted to be controlled indifferently, one for positioning operations and the other for machining progress operations.

5. Machining according to any one of claims 1 to 3, characterized in that at least any one of the two movable elements (16, 21) is adapted to be controlled for positioning operations defined by the calculation of the machining run start position, whereas the two movable elements (16, 21) are adapted to be controlled for coordinated machining progress operations determined by the slope of the machining run.

6. Machining center according to any one of claims 1 to 3, comprising a retractable probe (43) following the part supporting the machining spindle and which is designed to detect by contact with the section the fictitious reference surface relatively to which the machining limits are set, characterized in that the retractable probe (43) is carried by the second movable element (2) via a pivoting arm (45) permitting right or left detection, so that, as a function of the program, said first movable element (16) controlled by the numerical control according to the positioning instructions, brings said probe at the distance from the flanges (2g, 2d) of the section (2) most suitable to the measurement limits and so that the second movable element (21) controlled by the numerical control according the positioning instructions bring said probe in contact with the web (2m) of the section, the contact limits being then taken into account by the computing unit of the numerical control to determine the origin of the measurements subsequently defined by the positioning instructions, the probe being then retracted and the two movable elements being controlled by the numerical control for positioning and machining another machining cycle.

7. Machining center according to anyone of claims 1 to 3, characterized in that it comprises means of detecting and recording the real length of a tool every time a tool is changed, said means comprising a probe (51), preferably electrical, fixedly mounted on the damper (52) and the numerical control making it possible to orient the tool-holding head (25), to bring it opposite the probe (51) via the second movable element (21) controlled according to a special machining progress instruction and to move it toward the probe (51) via the first movable element (16) controlled according to a special positioning instruction, so as to measure, as soon as there is a contact, the run difference with respect to a control tool or to the absence of a tool.

8. Machining center according to any one of claims 1 to 3, characterized in that it comprises a tool magazine (53) in which the holes (57) are arranged so that their storing direction and mutual alignment direction are parallel to the moving axes of the first and second movable elements (16, 21) the pivoting spindle or spindles (26) of the orientable head (25) being equipped with an automatic tool-locking chuck (27) with freely slidable unlocking sleeve (61) and the magazine (53) cooperating with a swivelling comb (69) having two respectively locking and unlocking positions, and being connected to an actuating member such as a cylinder (74), said comb being adapted to push the chuck sleeve away from the selected spindle by cooperating with said movable elements which, under the control of said numerical control applying special positioning instructions respectively directed thereto, bring said spindle opposite the selected magazine hole, in order to deposit therein (57c) or to take therefrom (57m) a tool (5), and move it either closer to or away from the comb.

9. Machining center according to claim 8, characterized in that the holes (57) of the magazine (53), and the cutouts (71) of the comb (69) are oriented in parallel to the axis of said second movable element (21) and are aligned in parallel to the axis of the first movable element (16), the numerical control having recorded instructions for positioning said first movable element and searching for the suitable holes and instructions for positioning said second movable element and the comb so as to unlock and lock a tool.

Fig.1

Fig 2

Fig. 3

Fig. 4

Fig. 5

Fig. 6

5

Fig. 7

Fig. 9A

Fig. 9B

Fig. 9C

Fig. 9D

Fig. 8

Fig. 10

Fig. 11